(19)

**Europäisches Patentamt**
**European Patent Office**
**Office européen des brevets**

(11) **EP 4 524 676 A1**

(12) **EUROPEAN PATENT APPLICATION**

(43) Date of publication:
**19.03.2025 Bulletin 2025/12**

(21) Application number: **24186032.9**

(22) Date of filing: **02.07.2024**

(51) International Patent Classification (IPC):
**G05D 1/225** (2024.01)  **G05D 1/241** (2024.01)
**G05D 1/249** (2024.01)  **G05D 1/622** (2024.01)
**G05B 19/418** (2006.01)  **G07C 5/00** (2006.01)
**G05D 107/70** (2024.01)  **G05D 109/10** (2024.01)
**G05D 111/10** (2024.01)

(52) Cooperative Patent Classification (CPC):
**G05D 1/225; G05D 1/241; G05D 1/249;**
**G05D 1/622; G07C 5/00;** G05D 2107/70;
G05D 2109/10; G05D 2111/10

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **15.09.2023 JP 2023150147**
**18.01.2024 JP 2024005770**

(71) Applicant: **TOYOTA JIDOSHA KABUSHIKI**
**KAISHA**
**Aichi-ken, 471-8571 (JP)**

(72) Inventors:
• **YASUYAMA, Shogo**
**Toyota-shi, 471-8571 (JP)**
• **IWAHORI, Kento**
**Toyota-shi, 471-8571 (JP)**
• **SAWANO, Takuro**
**Toyota-shi, 471-8571 (JP)**

• **YOKOYAMA, Daiki**
**Toyota-shi, 471-8571 (JP)**
• **SAITO, Yasuhiro**
**Toyota-shi, 471-8571 (JP)**
• **INOUE, Go**
**Toyota-shi, 471-8571 (JP)**
• **OKAMOTO, Yuki**
**Toyota-shi, 471-8571 (JP)**
• **OHARA, Kento**
**Toyota-shi, 471-8571 (JP)**
• **KANOU, Takeshi**
**Toyota-shi, 471-8571 (JP)**
• **IWAZAKI, Noritsugu**
**Toyota-shi, 471-8571 (JP)**
• **HAYAKAWA, Yuki**
**Toyota-shi, 471-8571 (JP)**
• **YAMAKAWA, Toshifumi**
**Toyota-shi, 471-8571 (JP)**

(74) Representative: **D Young & Co LLP**
**3 Noble Street**
**London EC2V 7BQ (GB)**

(54) **CONTROL DEVICE FOR VEHICLE AND CONTROL METHOD FOR VEHICLE**

(57)      A control device (110; 200) for a vehicle includes an external force information acquisition unit (163; 213) configured to acquire external force information on external force acting on a vehicle that is an autonomous vehicle, an external force determination unit (164; 214) configured to determine a kind of the external force by using the external force information, and a traveling control signal generation unit (165; 215) configured to generate a traveling control signal for the vehicle in accordance with the kind of the external force.

## FIG. 2

**PROCESSOR** 111

- VEHICLE CONTROLLER ~151
- TRAVELING CONTROL SIGNAL ACQUISITION UNIT ~152
- EXTERNAL FORCE INFORMATION TRANSMISSION UNIT ~153

**MEMORY**
- PROGRAM ~PG1

112

113~ INPUT/OUTPUT INTERFACE ~114

- ~120 ACTUATOR GROUP
- ~130 COMMUNICATION DEVICE
- ~140 EXTERNAL FORCE INFORMATION SENSOR

205 COMMUNICATION DEVICE

300

400 PROCESS MANAGEMENT DEVICE

200

203~ INPUT/OUTPUT INTERFACE ~204

201 **PROCESSOR**

- 211~ VEHICLE POSITION INFORMATION ACQUISITION UNIT
- 212~ TARGET POSITION DECISION UNIT
- 213~ EXTERNAL FORCE INFORMATION ACQUISITION UNIT
- 214~ EXTERNAL FORCE DETERMINATION UNIT
- 215~ TRAVELING CONTROL SIGNAL GENERATION UNIT

202 **MEMORY**

- PROGRAM ~PG2
- IDEAL ROUTE ~IR

~216 TRAVELING CONTROL SIGNAL TRANSMISSION UNIT

## Description

BACKGROUND OF THE INVENTION

1. Field of the Invention

The present disclosure relates to a control device for a vehicle and a control method for a vehicle.

2. Description of Related Art

A technique of causing a vehicle to travel via remote control in a manufacturing process for the vehicle is known. In addition, an autonomous production method of assembling components while autonomously driving a vehicle before completion in an uncompleted state, such as a platform, is known.

In the autonomous production method, an event in which the vehicle rides on an external object existing on the track may occur. In a case where the vehicle rides on the external object, detecting the event and causing the vehicle to stop or retreat are desirable. Japanese Unexamined Patent Application Publication No. 2012-218489 (JP 2012-218489 A) discloses a step riding-on detection device that determines whether or not tires ride on a step based on a detection signal of an air pressure of the tires.

SUMMARY OF THE INVENTION

However, in the autonomous production method, in addition to external force acting on the vehicle in a case where the vehicle rides on the external object, external force acting on the vehicle may be generated in work of assembling the components to the vehicle. In a case where the external force acting on the vehicle is generated, when the vehicle is simply caused to stop or retreat, the work with respect to the vehicle may not be able to be continued. Therefore, appropriate control of an operation of the vehicle in accordance with the external force acting on the vehicle is desirable.

The present disclosure can be implemented as the following aspects.

A first aspect of the present disclosure provides a control device for a vehicle. The control device includes an external force information acquisition unit, an external force determination unit, and a traveling control signal generation unit. The external force information acquisition unit is configured to acquire external force information on external force acting on a vehicle that is an autonomous vehicle. The external force determination unit is configured to determine a kind of the external force by using the external force information. The traveling control signal generation unit is configured to generate a traveling control signal for the vehicle in accordance with the kind of the external force.

With the control device, the operation of the vehicle can be appropriately controlled in accordance with the kind of the external force acting on the vehicle.

In the control device, the kind of the external force may include a first kind of external force that needs a stop or a retreat of the vehicle and a second kind of external force that needs neither the stop nor the retreat of the vehicle.

With the control device, an appropriate traveling control signal can be generated in accordance with each of the first kind of external force that needs the stop or the retreat of the vehicle or the second kind of external force that needs neither the stop nor the retreat of the vehicle.

In the control device, the external force information acquisition unit may be configured to acquire information indicating reaction force of a drive motor or a steering motor of the vehicle as the external force information.

With the control device, the vehicle can be appropriately controlled in accordance with the information indicating the reaction force of the motor.

In the control device, the kind of the external force may include a first kind of external force generated when the vehicle rides on an external object and a second kind of external force generated by work with respect to the vehicle.

With the control device, an appropriate traveling control signal can be generated in accordance with each of the first kind of external force generated when the vehicle rides on the external object and the second kind of external force generated in the work with respect to the vehicle.

The control device may further include a traveling control signal transmission unit configured to transmit the traveling control signal to the vehicle.

With the control device, the control of the vehicle in accordance with the kind of the external force can be executed by remote control.

The control device may be mounted in the vehicle, and the control device may further include a vehicle controller configured to control an actuator group of the vehicle in response to the traveling control signal.

With the control device, the control of the vehicle in accordance with the kind of the external force can be implemented by the control device mounted in the vehicle.

In the control device, the external force information may include at least one of a generation position of the external force acting on the vehicle, a direction of the external force, a magnitude of the external force, and a time-series change in the external force.

With the control device, the kind of the external force can be distinguished based on the generation position of the external force, the direction of the external force, the magnitude of the external force, the time-series change in the external force, and the like.

In the control device, the traveling control signal generation unit may be configured to generate the traveling control signal such that the vehicle is caused to stop or retreat under a condition that the kind of the external force is vertically upward external force acting on wheels of the vehicle.

With the control device, since the vertically upward external force is generated on the wheels when the wheels of the vehicle rides on the external object, in this case, the vehicle can be caused to stop or retreat.

In the control device, the external force determination unit may be configured to perform the determination by distinguishing between a first kind of external force generated when the vehicle rides on an external object and a second kind of external force generated by work with respect to the vehicle, in accordance with the time-series change in the external force.

With the control device, an appropriate traveling control signal can be generated in accordance with each of the first kind of external force generated when the vehicle rides on the external object and the second kind of external force generated in the work with respect to the vehicle.

A second aspect of the present disclosure provides a control method for a vehicle. The control method includes acquiring external force information on external force acting on a vehicle that is an autonomous vehicle, determining a kind of the external force by using the external force information, and generating a traveling control signal for the vehicle in accordance with the kind of the external force.

With the control method, the operation of the vehicle can be appropriately controlled in accordance with the kind of the external force acting on the vehicle.

In the control method, the kind of the external force may include a first kind of external force that needs a stop or a retreat of the vehicle and a second kind of external force that needs neither the stop nor the retreat of the vehicle.

With the control method, an appropriate traveling control signal can be generated in accordance with each of the first kind of external force that needs the stop or the retreat of the vehicle and the second kind of external force that needs neither the stop nor the retreat of the vehicle.

In the control method, acquiring the external force information may include acquiring information indicating reaction force of a drive motor or a steering motor of the vehicle as the external force information.

With the control method, the vehicle can be appropriately controlled in accordance with the information indicating the reaction force of the motor.

In the control method, the kind of the external force may include a first kind of external force generated when the vehicle rides on an external object and a second kind of external force generated by work with respect to the vehicle.

With the control method, an appropriate traveling control signal can be generated in accordance with each of the first kind of external force generated when the vehicle rides on the external object and the second kind of external force generated by the work with respect to the vehicle.

The control method may further include transmitting the traveling control signal to the vehicle.

With the control method, the control of the vehicle in accordance with the kind of the external force can be executed by remote control.

The control method may further include controlling an actuator group of the vehicle in response to the traveling control signal.

With the control method, the control of the vehicle in accordance with the kind of the external force can be implemented.

In the control method, the external force information may include at least one of a generation position of the external force acting on the vehicle, a direction of the external force, a magnitude of the external force, and a time-series change in the external force.

With the control method, the kind of the external force can be distinguished based on the generation position of the external force, the direction of the external force, the magnitude of the external force, the time-series change in the external force, and the like.

In the control method, generating the traveling control signal may include generating the traveling control signal such that the vehicle is caused to stop or retreat under a condition that the kind of the external force is vertically upward external force acting on wheels of the vehicle.

With the control method, since the vertically upward external force is generated on the wheels when the wheels of the vehicle rides on the external object, in this case, the vehicle can be caused to stop or retreat.

In the control method, determining the kind of the external force may include performing the determination by distinguishing between a first kind of external force generated when the vehicle rides on an external object and a second kind of external force generated by work with respect to the vehicle, in accordance with the time-series change in the external force.

With the control method, an appropriate traveling control signal can be generated in accordance with each of the first kind of external force generated when the vehicle rides on the external object and the second kind of external force generated by the work with respect to the vehicle.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a conceptual diagram illustrating a configuration of a vehicle control system;
FIG. 2 is a block diagram illustrating configurations of a vehicle and a server in a first embodiment;
FIG. 3 is a plan view illustrating an installation example of an external force information sensor in the vehicle;

FIG. 4 is a diagram illustrating an example of external force generated when the vehicle rides on an external object;

FIG. 5 is a diagram illustrating an example of external force generated in work with respect to the vehicle;

FIG. 6 is a flowchart illustrating a processing procedure of vehicle control in the first embodiment;

FIG. 7 is a flowchart illustrating a processing procedure of vehicle control in a second embodiment;

FIG. 8 is a block diagram illustrating configurations of a vehicle and a server in a third embodiment;

FIG. 9 is a block diagram illustrating configurations of a vehicle and a server in a fourth embodiment; and

FIG. 10 is a block diagram illustrating configurations of a vehicle and a server in a fifth embodiment.

DETAILED DESCRIPTION OF EMBODIMENTS

First Embodiment

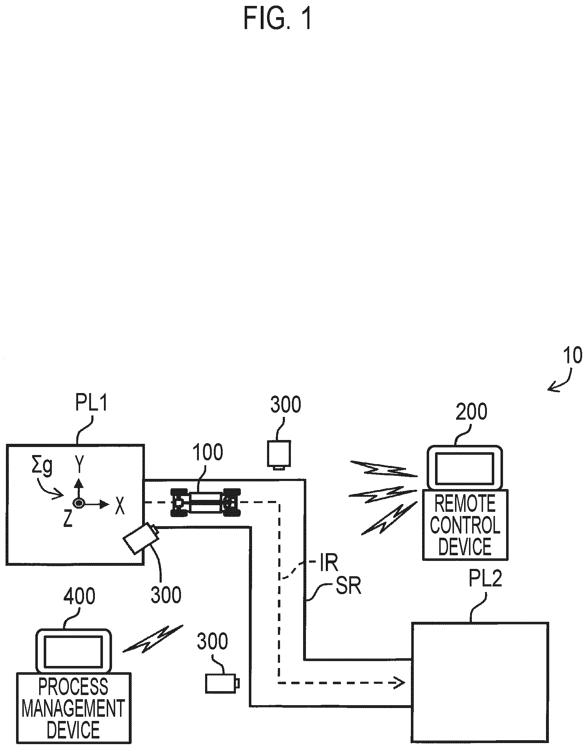

FIG. 1 is a conceptual diagram illustrating a configuration of a vehicle control system 10 in an embodiment. The vehicle control system 10 includes one or more vehicles 100 as moving bodies, a server 200 that generates a traveling control signal for remotely controlling the vehicle 100 and transmits the generated traveling control signal to the vehicle 100, a plurality of position information sensors 300 that detects vehicle position information, and a process management device 400 that manages a manufacturing process of the vehicle 100. The server 200 can also be referred to as "remote control device".

In the present specification, the "remote control" includes "complete remote control" in which all the operations of the vehicle 100 are completely decided from the outside of the vehicle 100, and "partial remote control" in which a part of the operations of the vehicle 100 is decided from the outside of the vehicle 100. In addition, the "autonomous control" includes "complete autonomous control" in which the vehicle 100 autonomously controls the operation thereof without receiving any information from the external device of the vehicle 100, and "partial autonomous control" in which the vehicle 100 autonomously controls the operation thereof by using the information received from the external device of the vehicle 100.

The vehicle 100 need solely have a configuration capable of moving by the unmanned driving, and, for example, may have a form of the platform having a configuration described below. Specifically, the vehicle 100 need solely include at least a vehicle control device, a drive device, a steering device, and a braking device, in order to exhibit three functions of "traveling", "turning", and "stopping" by the unmanned driving. In a case where the vehicle acquires the information from the outside for the unmanned driving, the vehicle 100 need solely further include a communication device. That is, the vehicle 100 that can move via the unmanned driving need not be equipped with at least a part of the interior components, such as a driver's seat and a dashboard, need not be equipped with at least a part of the exterior components, such as a bumper and a fender mirror, and need not be equipped with a bodyshell. In this case, the remaining components, such as the bodyshell, may be equipped on the vehicle while the vehicle 100 is shipped from the factory, or the remaining components, such as the bodyshell, may be equipped on the vehicle 100 after the vehicle 100 is shipped from the factory in a state where the remaining components, such as the bodyshell, are not equipped on the vehicle. Each component may be equipped from any direction, such as an upper side, a lower side, a front side, a rear side, a right side, or a left side of the vehicle 100, and may be equipped from the same direction or different directions.

The vehicle 100 may be manufactured by combining a plurality of modules. The module means a unit configured by a plurality of components assembled in accordance with the part or the function of the vehicle 100. For example, the platforms of the vehicle 100 may be manufactured by combining a front module that constitutes a front portion of the platform, a center module that constitutes a center portion of the platform, and a rear module that constitutes a rear portion of the platform. In addition, the number of the modules constituting the platform is not limited to three, and may be two or less or four or more. In addition to or instead of the components constituting the platform, the components constituting a portion of the vehicle 100 that is different from the platform may be modularized. In addition, various modules may include any exterior component, such as a bumper or a grille, or any interior component, such as the seat or a console. In addition, in addition to the vehicle 100, a moving body of any aspect may be manufactured by combining the modules. Such a module may be manufactured by joining the components via welding, a fastener, or the like, or may be manufactured by integrally molding at least a part of the components constituting the module as one component by casting. A molding method of integrally molding one component, particularly a relatively large component, is also called giga casting or mega casting. For example, the front module, the center module, and the rear module may be manufactured by using giga casting.

In the present disclosure, the "unmanned driving" means driving that does not depend on a driving operation of an occupant. The driving operation means an operation related to at least any one of "traveling", "turning", and "stopping" of the vehicle. The unmanned driving is implemented by an automatic or manual remote control using a device provided outside the vehicle or an autonomous control of the vehicle. The occupant who does not execute the driving operation may get in the vehicle that travels by the unmanned driving. Examples of the occupant who does not execute the driving operation include a person who simply sits in a seat of the vehicle and a person who executes work different from the driving operation, such as assembly, inspection, or operation of switches, while getting in the vehicle. In addition, the driving with the driving operation of the occupant may be referred to as "manned driving".

The transport of the vehicle 100 using the traveling of the vehicle 100 via the unmanned driving is also referred to as "autonomous transport". A configuration for implementing the autonomous transport is also referred to as "vehicle remote control autonomous transport system". A production method of producing the vehicle 100 by using the autonomous transport is also referred to as "autonomous production". In the autonomous production, for example, at the factory that manufactures the vehicle 100, at least a part of the transport of the vehicle 100 is implemented by the autonomous transport.

In the present disclosure, the "moving body" means an object that can move, for example, a vehicle or an electric vertical take-off and landing aircraft (so-called flying car). The vehicle 100 may be a vehicle that travels by wheels or a vehicle that travels using a caterpillar, and is, for example, a passenger car, a truck, a bus, a two-wheeled vehicle, a four-wheeled vehicle, a tank, and a construction vehicle.

In the present embodiment, the vehicle 100 is preferably a platform before completion. The vehicle 100 includes a platform of a battery electric vehicle (BEV), a gasoline vehicle, a hybrid electric vehicle, and a fuel cell electric vehicle. In addition, in a case where the moving body is other than the vehicle, the expression of "vehicle" and "car" in the present disclosure can be replaced with "moving body" as appropriate, and the expression of "travel" can be replaced with "move" as appropriate.

In the first embodiment, the remote control of the vehicle 100 is executed in the factory that manufactures the vehicle 100. The factory includes a first place PL1 and a second place PL2, and the places PL1, PL2 are connected by a traveling road SR. For example, the first place PL1 is a place where the vehicle 100 before the component assembly is stored, the traveling road SR is an assembly line where the components are assembled, and the second place PL2 is a place where the inspection of the vehicle 100 is performed. Any position in the factory where the vehicle 100 can travel is represented by XYZ coordinate values of a global coordinate system Σg.

The position information sensors 300 that targets the vehicle 100 for detection are installed around the traveling road SR. The server 200 can detect the relative position and orientation of the vehicle 100 with respect to an ideal route IR in real time by using the position information measured by the position information sensor 300. As the position information sensor 300, a camera or light detection and ranging (LiDAR) can be used. The positions of the individual position information sensors 300 are fixed, the relative relationship between the global coordinate system Σg and a device coordinate system that is a local coordinate system of the individual position information sensor 300 is known, and a coordinate transformation matrix for mutually transforming the coordinate values of the global coordinate system Σg and the coordinate values of the device coordinate system of the individual position information sensor 300 is also known.

The position information sensor 300 can also be referred to as "external sensor". The position information sensor 300 in the present embodiment is a sensor that captures the vehicle 100 from the outside of the vehicle 100. The position information sensor 300 includes a communication device (not illustrated), and can communicate with other devices, such as the server 200, using wired communication or wireless communication. Specifically, in a case where the position information sensor 300 is configured by the camera, the position information sensor 300 images the vehicle 100 and outputs the captured image as a detection result.

The server 200 generates the traveling control signal for causing the vehicle 100 to travel along the ideal route IR and transmits the traveling control signal to the vehicle 100. The vehicle 100 travels in response to the received traveling control signal. Therefore, the vehicle control system 10 can cause the vehicle 100 to move from the first place PL1 to the second place PL2 by the remote control without using a transport device, such as a crane or a conveyor. In addition, various components can be assembled to the vehicle 100 while the vehicle 100 travels along the ideal route IR. The traveling control signal can be referred to as "control command value". The ideal route IR can also be referred to as "reference route" or "target route".

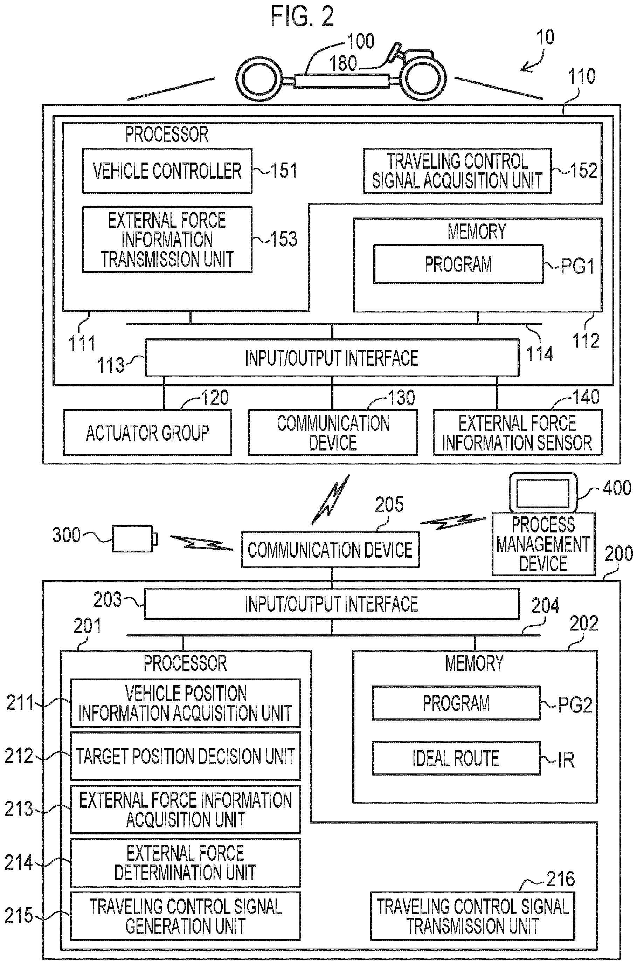

FIG. 2 is a block diagram illustrating configurations of the vehicle 100 and the server 200 in the first embodiment. The vehicle 100 includes a vehicle control device 110 that controls each unit of the vehicle 100, an actuator group 120 that is driven under control of the vehicle control device 110, a communication device 130 that communicates with the server 200 using wireless communication, and an external force information sensor 140 that detects the external force acting on the vehicle 100.

In the present embodiment, the actuator group 120 includes an actuator of a drive device for accelerating the vehicle 100, an actuator of a steering device for changing a traveling direction of the vehicle 100, and an actuator of a braking device for decelerating the vehicle 100. The drive device includes a battery, a traveling motor driven by power of the battery, and drive wheels rotated by the traveling motor. The actuator of the drive device includes the traveling motor. In addition, the actuator group 120 may further include an actuator for rocking a windshield wiper of the vehicle 100 or an actuator for opening and closing an electric window of the vehicle 100.

The vehicle control device 110 is configured by a computer including a processor 111, a memory 112, an input/output interface 113, and an internal bus 114. The processor 111, the memory 112, and the input/output interface 113 are connected to be bidirectionally communicable with each other via the internal bus 114. The actuator group 120, the communication device 130, and the external force information sensor 140 are connected to the input/output interface 113.

In the present embodiment, the processor 111 functions as a vehicle controller 151, a traveling control signal acquisition unit 152, and an external force information transmission unit 153 by executing a program PG1 stored in the memory 112 in advance. The traveling control signal acquisition unit 152 acquires the traveling control signal transmitted from the server 200. The vehicle controller 151 controls the actuator group 120 in response to the traveling control signal acquired from the server 200, to cause the vehicle 100 travel. The external force information transmission unit 153 acquires external force information detected by the external force information sensor 140 and transmits the acquired external force information to the server 200.

The server 200 is configured by a computer including a processor 201, a memory 202, an input/output interface 203, and an internal bus 204. The processor 201, the memory 202, and the input/output interface 203 are connected to be bidirectionally communicable with each other via the internal bus 204. A communication device 205 for communicating with the vehicle 100, the position information sensor 300, and the process management device 400 using wireless communication is connected to the input/output interface 203.

In the present embodiment, the processor 201 functions as a vehicle position information acquisition unit 211, a target position decision unit 212, an external force information acquisition unit 213, an external force determination unit 214, a traveling control signal generation unit 215, and a traveling control signal transmission unit 216 by executing a program PG2 stored in the memory 202 in advance. The ideal route IR is also stored in the memory 202. The ideal route IR is represented by a node indicating a departure point, a node indicating a passing point, a node indicating a destination, and a link connecting each node.

The vehicle position information acquisition unit 211 acquires the vehicle position information measured by the position information sensor 300, from the vehicle 100. The target position decision unit 212 decides a target position to which the vehicle 100 should head next by using the vehicle position information and the ideal route IR. The target position decision unit 212 decides the target position on the ideal route IR ahead of the current position of the vehicle 100. The target position decision unit 212 preferably estimates the current position and orientation of the vehicle 100 by using the vehicle position information when deciding the target position.

The position of the vehicle 100 can be acquired, for example, by calculating coordinates of a positioning point of the vehicle 100 in an image coordinate system by using an outer shape of the vehicle 100 detected from the captured image that is the output of the position information sensor 300, and transforming the calculated coordinates into the coordinates in the global coordinate system $\Sigma g$. The orientation of the vehicle 100 can be estimated based on, for example, an orientation of a movement vector of the vehicle 100 calculated from a positional change in a feature point of the vehicle 100 between frames of the captured image by using an optical flow method. The orientation of the vehicle 100 may be calculated, for example, by using an output result of a yaw rate sensor or the like mounted in the vehicle 100.

The outer shape of the vehicle 100 included in the captured image can be detected, for example, by inputting the captured image to a detection model using artificial intelligence. Examples of the detection model include a machine learning model that has been trained to implement any of semantic segmentation and instance segmentation. As the machine learning model, for example, a convolutional neural network (CNN) that has been trained by supervised learning using a training data set can be used. The training data set has, for example, a plurality of training images including the vehicle 100 and a correct answer label indicating whether each area in the training image is an area indicating the vehicle 100 or an area indicating an area other than the vehicle 100. When the CNN is trained, parameters of the CNN are preferably updated by backpropagation (error backpropagation method) to reduce an error between the output result of the detection model and the correct answer label.

The external force information acquisition unit 213 acquires the external force information transmitted from the vehicle 100. The external force determination unit 214 determines a kind of the external force in accordance with the external force information. The external force information preferably includes at least one of a generation position of the external force acting on the vehicle 100, a direction of the external force, a magnitude of the external force, and a time-series change in the external force. The external force determination unit 214 can determine the kind of the external force by using one or more of the generation position, the direction, the magnitude, and the time-series change. A determination method of the kind of the external force will be described below.

The traveling control signal generation unit 215 generates the traveling control signal in accordance with the next target position decided by the target position decision unit 212. The traveling control signal is a command for causing the vehicle 100 to travel along the ideal route IR. In other words, the traveling control signal generation unit 215 generates the traveling control signal for causing the vehicle 100 to travel along the ideal route IR, in accordance with the current position of the vehicle 100. The traveling control signal generation unit 215 calculates a traveling speed of the vehicle 100 from the transition of the position of the vehicle 100 and compares the calculated traveling speed with a target speed. As a whole, the traveling control signal generation unit 215 decides the acceleration such that the vehicle 100 is accelerated when the traveling speed is lower than the target speed, and decides the acceleration such that the vehicle 100 is decelerated when the traveling speed is higher than the target speed. In a case where the vehicle 100 is located on the ideal route IR, the traveling control signal generation unit 215 decides a steering angle and the acceleration such that the vehicle 100 does not deviate from the ideal route IR. In a case where the vehicle 100 is not located on the ideal route IR, in other words, in a case where the vehicle 100 deviates from the ideal route IR, the traveling control signal generation unit 215 decides the steering angle and the acceleration such that the vehicle 100 returns to the ideal route IR. The traveling control signal can be generated as a command including a driving force or a braking force, the steering angle, and the acceleration. Instead of the steering angle and the acceleration, the steering angle and the speed may be used. In addition, whether to use the steering angle and the acceleration or the steering angle and the speed may be switched in accordance with the state of the vehicle 100. For example, the steering angle and the acceleration may be used in a case where the vehicle 100 is a completed vehicle, and the steering angle and the speed may be used in a case where the vehicle 100 is a platform, such as a chassis module, or the reverse combination may be used. In the present embodiment, the traveling control signal generation unit 215 further generates or modifies the traveling control signal in accordance with the kind of the external force determined by the external force determination unit 214. This point will be described below. The traveling control signal transmission unit 216 transmits the traveling control signal to the vehicle 100.

The process management device 400 executes the management of the entire manufacturing process of the vehicle 100 in the factory. For example, when one vehicle 100 starts traveling along the ideal route IR, the individual information indicating an identification number or a model of the vehicle 100 is transmitted from the process management device 400 to the server 200. The position of the vehicle 100 detected by the server 200 is also transmitted to the process management device 400. In addition, the function of the process management device 400 may be implemented in the same device as the server 200. In addition, the process management device 400 may be omitted.

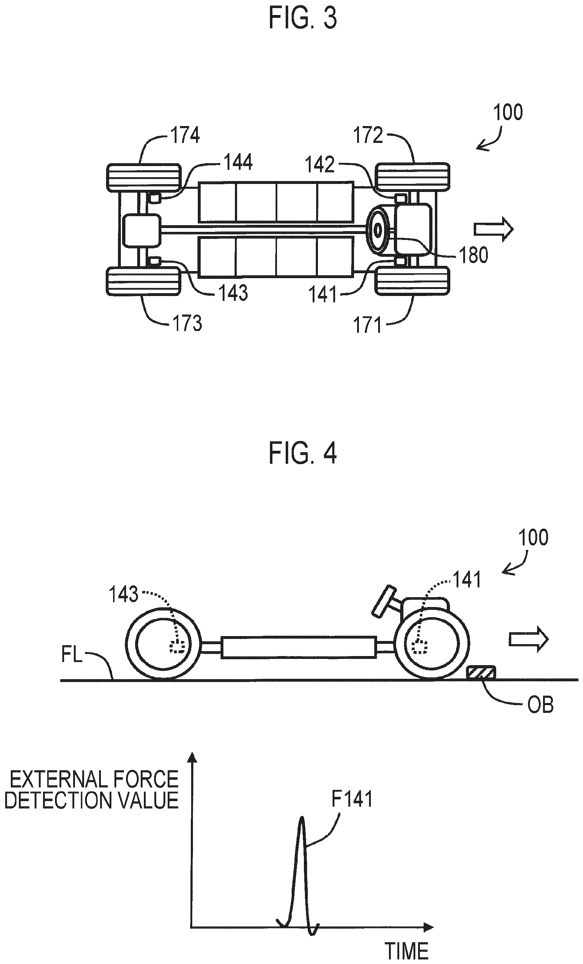

FIG. 3 is a plan view illustrating an installation example of the external force information sensor 140 in the vehicle 100. In this example, a plurality of external force information sensors 141 to 144 is installed at different places of the vehicle 100. Specifically, the external force information sensors 141, 142 are installed in the vicinity of front wheels 171, 172, and the external force information sensors 143, 144 are also installed in the vicinity of rear wheels 173, 174. Note that these kinds of disposition are examples, and a plurality of the external force information sensors 140 can be provided at various other positions of the vehicle 100.

The external force information sensors 141 to 144 preferably have both a first function of detecting force acting on the individual wheels from a chassis of the vehicle 100 and a second function of detecting force acting on the individual wheels from an external object existing on the traveling road SR. Specifically, using sensors that detect the force acting between the individual wheels (or axles) and the chassis as the external force information sensors 141 to 144 is preferable in that the individual external force information sensors 141 to 144 have the first function and the second function. Alternatively, to use a pressure sensor that detects a pressure of the individual wheels as the external force information sensors 141 to 144 is also preferable in that the individual external force information sensors 141 to 144 have the first function and the second function. Note that a sensor having the first function and a sensor having the second function may be separately provided.

As the external force information sensor 140, for example, an impact detection sensor, an acceleration sensor, a one-axis force sensor, a three-axes force sensor, a six-axes force sensor, or a pressure sensor can be used. As the external force information sensor 140, in particular, the three-axes force sensor or the six-axes force sensor that can detect the orientation of the force is preferably used. In addition, an inclination angle sensor that detects an inclination angle of the vehicle 100 may be added as one kind of the external force information sensors 140.

As the external force information sensor 140, a sensor that detects reaction force of a drive motor that drives the drive wheels of the vehicle 100 or a sensor that detects reaction force of a steering motor that drives a steering wheel 180 of the vehicle 100 can also be used. The drive motor may be a motor that drives two or four drive wheels, or may be an in-wheel motor installed in the wheels.

Regarding the reaction force of the motor, the following expression (q1) is established.

$$J\theta^{\square\square} = Tm - Td \ (q1)$$

Here, J is an inertia moment of the motor, $\Theta$ is an angle of a motor shaft, $\theta^{\square\square}$ is an angular acceleration that is a second-order differential of the angle $\Theta$ of the motor shaft, Tm is a torque command of the motor, and Td is the reaction force.

When the expression (q1) is modified, the reaction force Td can be calculated by the following expression (q2).

$$Td = Tm - J\theta^{\square\square} \ (q2)$$

The angle $\Theta$ of the motor shaft can be calculated by using a rotation angle sensor, such as a resolver or a Hall IC. That is, in a case where the reaction force of the motor is detected, the rotation angle sensor, such as the resolver or the Hall IC, can be used as the external force information sensor 140.

In general, any external force can be defined by an external force vector having a start point of the external force, the direction of the external force, and the magnitude of the external force. Accordingly, the external force information sensors 140 are preferably selected and disposed such that the start point, the direction, and the magnitude of the external force acting on the vehicle 100 can be decided from the detection values of the external force information sensors 140.

The external force determination unit 214 can determine the kind of the external force or the generation position of the external force by using the detection values of the external force information sensors 140. As the determination method of the external force, for example, one or more of various methods described below can be used.

Determination Method J1

The kind of the external force is determined in accordance with the position of the external force information sensor that detects the impact among the external force information sensors 140 installed at different places of the vehicle 100. Specifically, for example, in a case where the impact is detected by solely one of the external force information sensors 141 to 144, the determination can be performed that the impact is the external force generated when the vehicle 100 rides on the external object. In a case where the impact is detected by all the external force information sensors 141 to 144, the determination can be performed that the impact is the external force generated in the work with respect to the vehicle 100. The "impact" means the detection value equal to or higher than a certain level.

Determination Method J2

The kind of the external force is determined in accordance with the time-series change in the external force detected by the external force information sensor 140.

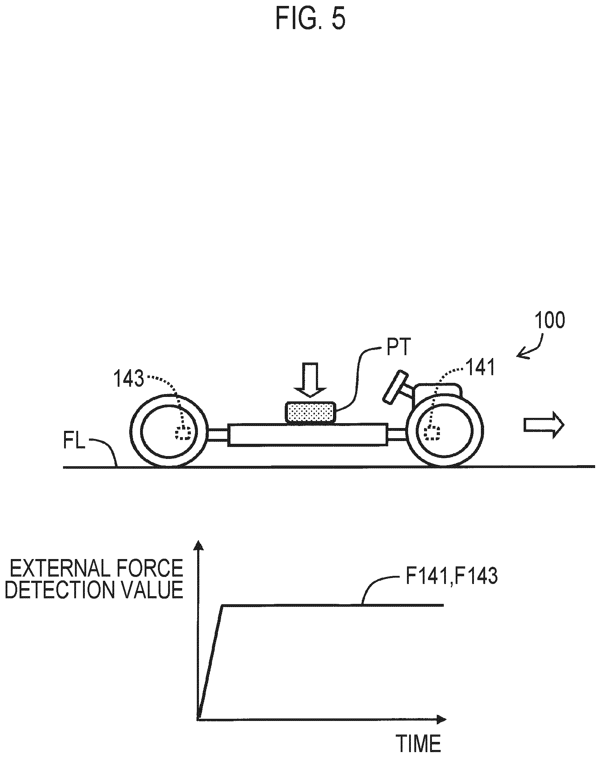

FIGS. 4 and 5 illustrate examples of the external force determined by the determination method J2. FIG. 4 illustrates an example of a first kind of external force generated when the vehicle 100 rides on an external object OB, and FIG. 5 illustrates an example of a second kind of external force generated in the work with respect to the vehicle 100.

In the example of FIG. 4, the external object OB exists on a floor surface FL of the traveling road of the vehicle 100. When the vehicle 100 travels and the front wheels 171 ride on the external object OB, an external force detection value F 141 obtained by the external force information sensor 141 installed in the vicinity of the front wheels 171 temporarily rises greatly and has a waveform of a mountain shape. The external force detection values obtained by the other external force information sensors 142 to 144 are so small that the external force detection values can be ignored, and thus are not illustrated. The external force detection value F 141 indicates vertically upward external force acting on the wheels of the vehicle 100.

In the example of FIG. 5, the work of assembling components PT is executed on the vehicle 100 that is traveling. In this case, after the external force detection value F141 obtained by the external force information sensor 141 installed in the vicinity of the front wheels 171 rises, the external force detection value F141 is maintained at a substantially constant level for a while, and has a substantially trapezoidal shape. An external force detection value F 143 obtained by the external force information sensor 143 installed in the vicinity of the rear wheels 173 is also the same. In many cases, the other external force information sensors 142, 144 also indicate the external force detection values in almost the same pattern.

The external force determination unit 214 can perform the determination by distinguishing between the kinds of the external force in accordance with the time-series change in the external force as illustrated in FIGS. 4 and 5. That is, in a case where the external force detection value indicates the time-series change in the mountain shape as illustrated in FIG. 4, the determination can be performed as being the first kind of external force generated when the vehicle 100 rides on the external object. In addition, in a case where the external force detection value indicates the time-series change in the trapezoidal shape as illustrated in FIG. 5, the determination can be performed as being the second kind of external force generated by the work with respect to the vehicle 100.

Determination Method J3

The generation position of the external force is specified from the magnitudes and the timings of the detection values in the external force information sensors 140 installed at different places of the vehicle 100. That is, the generation position of the external force can be specified by using the characteristics that the position closer to the generation position of the external force has a larger detection value and the detection value rises at an earlier timing.

Determination Method J4

In a case where the inclination angle sensor is installed as the external force information sensor 140, the generation position of the external force is specified in accordance with the inclination detected by the inclination angle sensor. For example, in a case where the right front wheels 171 ride on the external object, the vehicle 100 is inclined such that a right front portion of the vehicle 100 is raised upward, so that the estimation can be performed that the upward impact is generated in the right front portion of the vehicle 100 from the inclination. In addition, each of the determination methods J3, J4 can be used in combination with the determination method J1 or J2.

Determination Method J5

The kind of the external force is determined in accordance with the magnitude of the external force detected by the external force information sensor 140. For example, the determination is performed as being the first kind of external force that needs the stop or the retreat of the vehicle 100 in a case where the detected external force is equal to or greater than a preset threshold value, and the determination is performed as being the second kind of external force that needs neither the stop nor the retreat of the vehicle 100 in a case where the detected external force is less than the threshold value. The determination method J5 can be applied in a case where various external force information sensors 140 are used, and can also be applied in a case where the reaction force of the drive motor or the steering motor is detected as the external force.

In addition, in a case where the reaction force of the drive motor or the steering motor is detected, whether the kind of the external force is the first kind of external force that needs the stop or the retreat of the vehicle 100 or the second kind of external force that needs neither the stop nor the retreat of the vehicle 100 may be determined in accordance with the time-series change in the reaction force. The determination method can be considered as one kind of the determination methods J2 described above.

The external force determination unit 214 may be configured to determine the kind or the generation position of the external force by performing template matching using the detection values of the external force information sensors 140. Alternatively, the external force determination unit 214 may be configured to determine the kind or the generation position of the external force by using a machine learning model using the detection values of the external force information sensors 140 as input. In any of these cases, the external force determination unit 214 is preferably able to perform the determination by distinguishing between the first kind of external force generated when the vehicle 100 rides on the external object and the second kind of external force generated by the work with respect to the vehicle 100. Alternatively, the external force determination unit 214 may be configured to perform the determination by distinguishing between the first kind of external force that needs the stop or the retreat of the vehicle 100 or the second kind of external force that needs neither the stop nor the retreat of the vehicle 100. For example, the external force generated when the vehicle 100 rides on the external object corresponds to the "first kind of external force that needs the stop or the retreat of the vehicle 100", and the other external force corresponds to the "second kind of external force that needs neither the stop nor the retreat of the vehicle 100". In addition, the term "need" may be replaced with the term "request".

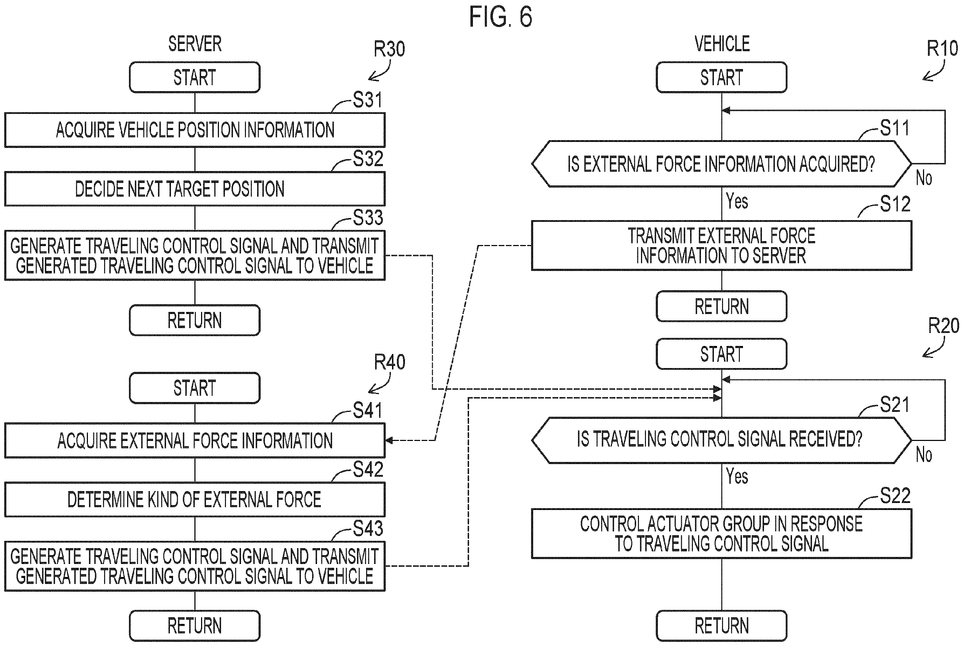

FIG. 6 is a flowchart illustrating a processing procedure of vehicle control in the first embodiment. The processor 111 of the vehicle 100 executes each of a first routine R10 and a second routine R20. The server 200 executes each of a third routine R30 and a fourth routine R40.

The first routine R10 includes steps S11, S12. In step S11, the external force information transmission unit 153 waits until the external force information is acquired from the external force information sensor 140. When the external force information is acquired, the processing proceeds to step S12, and the external force information transmission unit 153 transmits the external force information to the server 200. The first routine R10 may be executed regularly at a constant period, or may be executed as interrupt processing when the external force information including the external force detection value equal to or greater than a certain level is input from the external force information sensor 140. The content of the second routine R20 will be described below.

The processor 201 of the server 200 executes the third routine R30 including steps S31 to S33. The third routine R30 may be executed regularly at a constant period, or may be executed each time the vehicle position information acquisition unit 211 newly acquires the vehicle position information from the position information sensor 300 that measures the vehicle 100 that is a control target.

In step S31, the vehicle position information acquisition unit 211 acquires the vehicle position information by using the detection result output from the position information sensor 300. In the present embodiment, the vehicle position information includes the X, Y, and Z coordinates in the global coordinate system Eg of the factory. In a case where the position information sensor 300 is the camera installed in the factory, the position information sensor 300 outputs the image as the detection result. The position and the orientation of the position information sensor 300 are adjusted in advance. The vehicle position information acquisition unit 211 of the server 200 detects the position of the vehicle 100 from the image that is the detection result of the position information sensor 300, and acquires the vehicle position information in the factory from the position of the vehicle 100 in the image. The vehicle position information acquisition unit 211 can detect the vehicle 100 from the image by using, for example, a machine learning model that has been trained in advance to detect the vehicle 100 from the image.

In step S32, the target position decision unit 212 decides the target position to which the vehicle 100 should head next by using the vehicle position information. In the present embodiment, the target position is represented by the X, Y, and Z coordinates in the global coordinate system Σg of the factory. The server 200 stores the ideal route IR that is a route on which the vehicle 100 should travel, in advance. The ideal route IR is represented by a node indicating a departure point, a node indicating a passing point, a node indicating a destination, and a link connecting each node. The target position decision unit 212 decides the target position to which the vehicle 100 should head next by using the vehicle position information and the ideal route IR. The target position decision unit 212 decides the target position on the ideal route IR ahead of the current position of the vehicle 100.

In step S33, the traveling control signal generation unit 215 generates the traveling control signal in accordance with the next target position of the vehicle 100. In the present embodiment, the traveling control signal includes the acceleration and the steering angle of the vehicle 100 as the parameters. A normal traveling control signal in which the external force is not taken into consideration is generated, for example, as follows. First, the traveling control signal generation unit 215 calculates the traveling speed of the vehicle 100 from the transition of the position of the vehicle 100, and compares the calculated traveling speed with a predetermined target speed of the vehicle 100. The traveling control signal generation unit 215 decides the acceleration such that the vehicle 100 is accelerated when the traveling speed is lower than the target speed, and decides the acceleration such that the vehicle 100 is decelerated when the traveling speed is higher than the target speed. The traveling control signal generation unit 215 decides the steering angle such that the vehicle 100 does not deviate from the ideal route IR in a case where the vehicle 100 is located on the ideal route IR, and decides the steering angle such that the vehicle 100 returns to the ideal route IR in a case where the vehicle 100 is not located on the ideal route IR, in other words, in a case where the vehicle 100 deviates from the ideal route IR.

The traveling control signal transmission unit 216 transmits the generated traveling control signal to the vehicle 100. The server 200 repeats the third routine R30 including the acquisition of the vehicle position information, the decision of the target position, the generation of the traveling control signal, and the transmission of the traveling control signal at a predetermined period.

The processor 201 of the server 200 executes the fourth routine R40 including steps S41 to S43 independently of the third routine R30. The fourth routine R40 may be executed regularly at a constant period, or may be executed each time the external force information acquisition unit 213 newly acquires the external force information from the vehicle 100. The fourth routine R40 may be executed as interrupt processing each time new external force information is input. In a case where the fourth routine R40 is executed at a constant period, the period is preferably set to be shorter than the period of the third routine R30, and is more preferably set to be equal to or shorter than 1/2 of the period of the third routine R30.

In step S41, the external force information acquisition unit 213 acquires the external force information transmitted from the vehicle 100. In step S42, the external force determination unit 214 determines the kind of the external force in accordance with the external force information. In this case, the external force determination unit 214 may also determine the generation position of the external force. In step S43, the traveling control signal generation unit 215 generates the traveling control signal in accordance with the kind of the external force. For example, in a case where the kind of the external force is the first kind of external force generated when the vehicle 100 rides on the external object, the traveling control signal generation unit 215 generates the traveling control signal such that the vehicle 100 is caused to stop or retreat. A typical first kind of external force in this case is vertically upward external force acting on the wheels of the vehicle 100. Alternatively, in a case where the kind of the external force is the first kind of external force that needs the stop or the retreat of the vehicle 100, the traveling control signal generation unit 215 may generate the traveling control signal such that the vehicle 100 is caused to stop or retreat. The traveling control signal is transmitted to the vehicle 100 by the traveling control signal transmission unit 216. In a case where the kind of the external force is the second kind of external force generated in the work with respect to the vehicle 100, the traveling control signal generation unit 215 ignores the external force and finishes the fourth routine R40 without generating the traveling control signal. Alternatively, in a case where the kind of the external force is the second kind of external force that needs neither the stop nor the retreat of the vehicle 100, the traveling control signal generation unit 215 may ignore the external force and finishes the fourth routine R40 without generating the traveling control signal. In addition, the traveling control signal generated in the fourth routine R40 is preferably applied to the control of the vehicle 100 with a priority over the traveling control signal generated in the third routine R30.

The second routine R20 of the processor 111 of the vehicle 100 includes steps S21, S22. In step S21, the traveling control signal acquisition unit 152 waits until the traveling control signal is acquired from the server 200. As the traveling control signal, the traveling control signal generated in the third routine R30 or the fourth routine R40 is acquired. As described above, the traveling control signal generated in the fourth routine R40 is preferably applied to the control of the vehicle 100 with a priority over the traveling control signal generated in the third routine R30.

When the traveling control signal is acquired, the processing proceeds to step S22, and the vehicle controller 151 controls the operation of the vehicle 100 in response to the acquired traveling control signal. As a result, the vehicle 100 can be caused to travel along the ideal route IR. In addition, in a case where the vehicle 100 rides on the external object, the vehicle 100 can be caused to stop or retreat. The second routine R20 is preferably executed regularly at a constant period.

As described above, in the first embodiment, the server 200 determines the kind of the external force by using the external force information detected by the external force information sensors 140, and generates the traveling control signal of the vehicle 100 in accordance with the kind of the external force. Therefore, the operation of the vehicle 100 can be appropriately controlled in accordance with the kind of the external force acting on the vehicle 100.

Second Embodiment

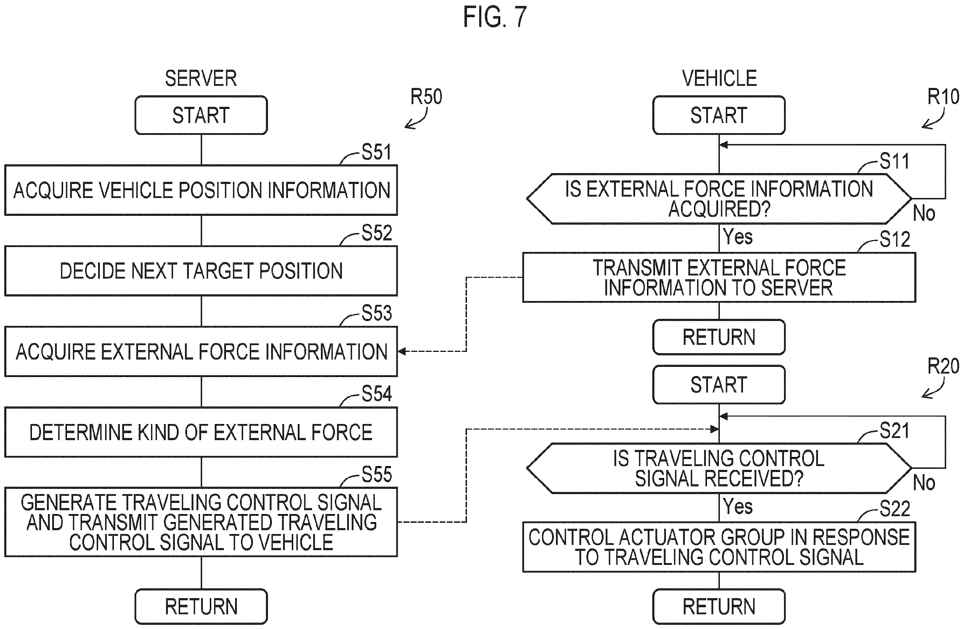

FIG. 7 is a flowchart illustrating a processing procedure of vehicle control in the second embodiment. The system configuration and the device configuration in the second embodiment are the same as the system configuration and the device configuration in the first embodiment. The difference from the processing procedure of the first embodiment illustrated in FIG. 6 is that the server 200 executes a routine R50 instead of the routines R30, R40.

The processor 201 of the server 200 executes the routine R50 including steps S51 to S55. The routine R50 may be executed regularly at a constant period, or may be executed each time the vehicle position information acquisition unit 211 newly acquires the vehicle position information from the position information sensor 300 that measures the vehicle 100 that is the control target.

The processing of steps S51, S52 is the same as the processing of steps S31, S32 in FIG. 6, and the next target position is decided by using the vehicle position information detected by the position information sensor 300. The processing of steps S53, S54 is the same as the processing of steps S41, S42 in FIG. 6, and the kind of the external force is determined by using the external force information detected by the external force information sensor 140. In addition, the execution order of steps S51 to S54 can be changed as appropriate.

In step S55, the traveling control signal generation unit 215 generates the traveling control signal in accordance with the next target position of the vehicle 100 and the kind of the external force. For example, in a case where the kind of the external force is the first kind of external force generated when the vehicle 100 rides on the external object, the traveling control signal generation unit 215 may generate the traveling control signal such that the vehicle 100 is caused to stop or retreat. In this way, the vehicle 100 can be caused to stop or retreat when the wheels of the vehicle 100 ride on the external object. Alternatively, in a case where the kind of the external force is the first kind of external force that needs the stop or the retreat of the vehicle 100, the traveling control signal generation unit 215 may generate the traveling control signal such that the vehicle 100 is caused to stop or retreat. In a case where the kind of the external force is the second kind of external force generated in the work with respect to the vehicle 100, the traveling control signal generation unit 215 ignores the external force and generates the normal traveling control signal for continuing the traveling of the vehicle 100 along the ideal route IR. Alternatively, when the kind of the external force is the second kind of external force that needs neither the stop nor the retreat of the vehicle 100, the traveling control signal generation unit 215 may ignore the external force and generate the normal traveling control signal for continuing the traveling of the vehicle 100 along the ideal route IR. The traveling control signal transmission unit 216 transmits the generated traveling control signal to the vehicle 100. The first routine R10 and the second routine R20 of the vehicle 100 are the same as in FIG. 6.

The second embodiment also has almost the same effects as in the first embodiment. That is, the server 200 determines the kind of the external force by using the external force information detected by the external force information sensors 140, and generates the traveling control signal of the vehicle 100 in accordance with the kind of the external force. Therefore, the operation of the vehicle 100 can be appropriately controlled in accordance with the kind of the external force acting on the vehicle 100.

Third Embodiment

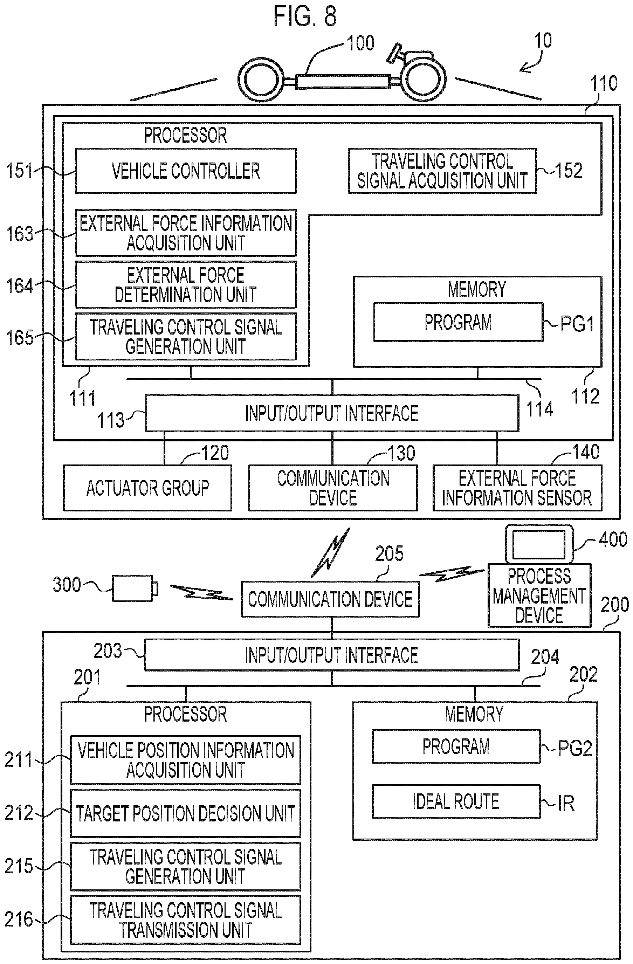

FIG. 8 is a block diagram illustrating configurations of the vehicle 100 and the server 200 in the third embodiment. The differences from the configuration of the first embodiment illustrated in FIG. 2 are mainly the following two points.

The first point is that the function of the external force information transmission unit 153 is omitted from the function of the processor 111 of the vehicle 100, and functions of an external force information acquisition unit 163, an external force determination unit 164, and a traveling control signal generation unit 165 are added.

The second point is that the functions of the external force information acquisition unit 213 and the external force determination unit 214 are omitted from the function of the processor 201 of the server 200.

The external force information acquisition unit 163 acquires the external force information that is the detection value of the external force information, from the external force information sensors 140. The external force determination unit 164 has the same function as the external force determination unit 214 in FIG. 2, and determines the kind or the generation position of the external force from the external force information. The traveling control signal generation unit 165 generates a final traveling control signal by applying, as needed, modification in accordance with the kind of the external force to the traveling control signal received from the server 200, and supplies the generated traveling control signal to the vehicle controller 151. For example, in a case where the kind of the external force is the first kind of external force generated when the vehicle 100 rides on the external object, the traveling control signal generation unit 165 creates or modifies the traveling control signal such that the vehicle 100 is caused to stop or retreat. Alternatively, in a case where the kind of the external force is the first kind of external force that needs the stop or the retreat of the vehicle 100, the traveling control signal generation unit 165 may create or modify the traveling control signal such that the vehicle 100 is caused to stop or retreat. In a case where the kind of the external force is the second kind of external force generated in the work with respect to the vehicle 100, the traveling control signal generation unit 165 ignores the external force and supplies the traveling control signal received from the server 200 to the vehicle controller 151 without modification. Alternatively, in a case where the kind of the external force is the second kind of external force that needs neither the stop nor the retreat of the vehicle 100, the traveling control signal generation unit 165 may ignore the external force and supply the traveling control signal received from the server 200 to the vehicle controller 151 without modification.

In the third embodiment, the vehicle control device 110 of the vehicle 100 executes the routines R10, R20, R40 of FIG. 6, and the server 200 executes the routine R30 of FIG. 6. Note that the communication between the vehicle 100 and the server 200 in the routines R10, R20, R40 is omitted as appropriate.

The third embodiment also has almost the same effects as in the first embodiment. In the third embodiment, the vehicle control device 110 mounted in the vehicle 100 can implement the control of the vehicle 100 in accordance with the kind of the external force.

Fourth Embodiment

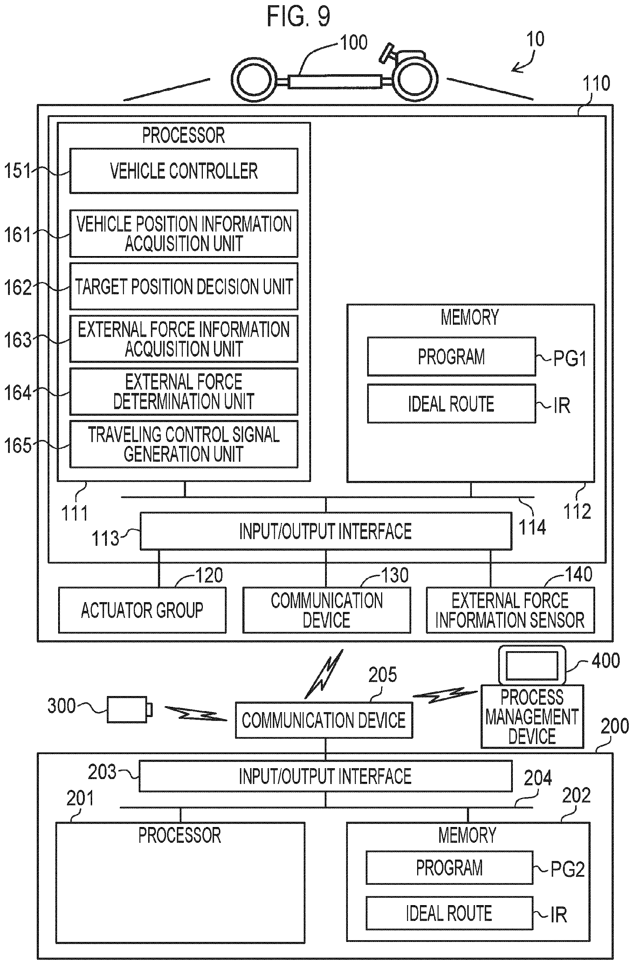

FIG. 9 is a block diagram illustrating configurations of the vehicle 100 and the server 200 in the fourth embodiment. The differences from the configuration of the third embodiment illustrated in FIG. 8 are mainly the following three points.

The first point is that the function of the traveling control signal acquisition unit 152 is omitted from the function of the processor 111 of the vehicle 100, and functions of a vehicle position information acquisition unit 161 and a target position decision unit 162 are added.

The second point is that the ideal route IR is stored in the memory 112 of the vehicle 100.

The third point is that the functions of the vehicle position information acquisition unit 211, the target position decision unit 212, the traveling control signal generation unit 215, and the traveling control signal transmission unit 216 are omitted from the function of the processor 201 of the server 200.

In addition, the ideal route IR is stored in the memory 112 of the vehicle 100 before the vehicle 100 starts traveling along the ideal route IR. The ideal route IR may be supplied from the server 200 or may be written in the memory 112 of the vehicle 100 by using another means. In the latter case, the server 200 can be omitted.

In the fourth embodiment, the vehicle control device 110 of the vehicle 100 executes all of the routines R10, R20, R30, R40 of FIG. 6, or all of the routines R10, R20, R50 of FIG. 7. Note that the communication between the vehicle 100 and the server 200 in the routines R10, R20, R30, R40 of FIG. 6 and the communication between the vehicle 100 and the server 200 in the routines R10, R20, R50 of FIG. 7 are omitted as appropriate.

The vehicle position information acquisition unit 161 has the same function as the vehicle position information acquisition unit 211 of FIGS. 2 and 8, and acquires the vehicle position information measured by the position information sensor 300. The target position decision unit 162 has the same function as the target position decision unit 212 of FIGS. 2 and 8, and decides the next target position of the vehicle 100 along the ideal route IR by using the vehicle position information. The traveling control signal generation unit 165 generates the traveling control signal in accordance with the next target position of the vehicle 100 and the kind of the external force. For example, in a case where the kind of the external force is the first kind of external force generated when the vehicle 100 rides on the external object, the traveling control signal generation unit 165 generates the traveling control signal such that the vehicle 100 is caused to stop or retreat. In a case where the kind of the external force is the second kind of external force generated in the work with respect to the vehicle 100, the traveling control signal generation unit 165 ignores the external force and generates the normal traveling control signal for continuing the traveling of the vehicle 100 along the ideal route IR. The generated traveling control signal is supplied to the vehicle controller 151, and the vehicle controller 151 controls the actuator group 120 in response to the traveling control signal.

The traveling control signal is preferably generated to include any one of the steering angle and the acceleration, and the steering angle and the speed, as in the first to third embodiments. That is, in the fourth embodiment, in a case where the vehicle 100 receives route information on the ideal route IR, the steering angle and the acceleration used for the traveling control signal may be created from the route information, or the steering angle and the speed may be created.

The fourth embodiment also almost the same effects as in the first to third embodiments. In the fourth embodiment, the processing from the acquisition of the vehicle position information to the generation of the traveling control signal can be executed by the vehicle control device 110 of the vehicle 100 without using the server 200, and the control of the vehicle 100 in accordance with the kind of the external force can be implemented. That is, the vehicle 100 can be caused to travel via autonomous control without the remote control of the vehicle 100 via the server 200.

Fifth Embodiment

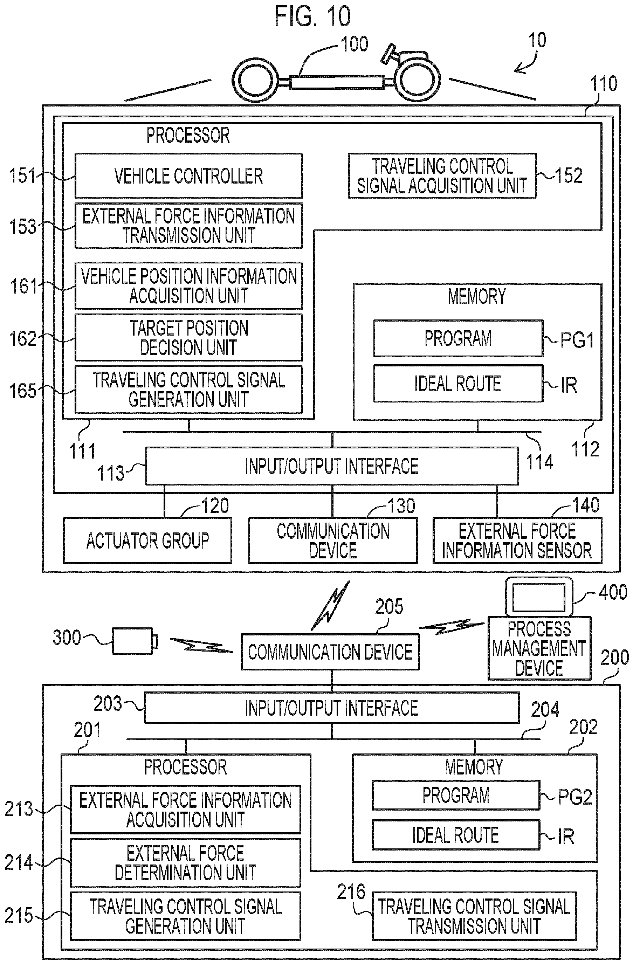

FIG. 10 is a block diagram illustrating configurations of the vehicle 100 and the server 200 in the fifth embodiment. The differences from the configuration of the first embodiment illustrated in FIG. 2 are mainly the following three points.

The first point is that the functions of the vehicle position information acquisition unit 161, the target position decision unit 162, and the traveling control signal generation unit 165 are added to the function of the processor 111 of the vehicle 100.

The second point is that the ideal route IR is stored in the memory 112 of the vehicle 100.

The third point is that functions of the vehicle position information acquisition unit 211 and the target position decision unit 212 are omitted from the function of the processor 201 of the server 200.

In addition, the ideal route IR is stored in the memory 112 of the vehicle 100 before the vehicle 100 starts traveling along the ideal route IR. The ideal route IR may be supplied from the server 200 or may be written in the memory 112 of the vehicle 100 by using another means.

The device configuration in the fifth embodiment corresponds to a device configuration in which the function of generating the traveling control signal in accordance with the kind of the external force is transferred from the vehicle control device 110 of the vehicle 100 to the server 200, from the device configuration in the third embodiment illustrated in FIG. 9.

In the fifth embodiment, the vehicle control device 110 of the vehicle 100 executes the routines R10, R20, R30 of FIG. 6, and the server 200 executes the routine R40. Note that the communication between the vehicle 100 and the server 200 in the routines R10, R20, R30 of FIG. 6 is omitted as appropriate.

The functions of the vehicle position information acquisition unit 161, the target position decision unit 162, and the traveling control signal generation unit 165 are the same as the functions of the vehicle position information acquisition unit 161, the target position decision unit 162, and the traveling control signal generation unit 165 in the third embodiment, and thus the description thereof will be omitted. The fifth embodiment also almost the same effects as in the first to fourth embodiments.

Other Embodiments

In the first to third embodiments, the server 200 executes the processing from the acquisition of the vehicle position information to the generation of the traveling control signal. In contrast, the vehicle 100 may execute at least a part of the processing from the acquisition of the vehicle position information to the generation of the traveling control signal. For example, the following forms (F1) to (F3) may be adopted.

(F1) The server 200 may acquire the vehicle position information, decide the target position to which the vehicle 100 should head next, and generate the route from the current position of the vehicle 100 indicated by the acquired position information to the target position. The server 200 may generate a route to the target position between the current position and the destination, or may generate a route to the destination. The server 200 may transmit the generated route to the vehicle 100. The vehicle 100 may generate the traveling control signal for causing the vehicle 100 to travel on the route received from the server 200, and control the actuator group 120 by using the generated traveling control signal.

(F2) The server 200 may acquire the vehicle position information, and transmit the acquired position information to the vehicle 100. The vehicle 100 may decide the target position to which the vehicle 100 should head next, generate a route from the current position of the vehicle 100 represented by the received position information to the target position, generate a traveling control signal such that the vehicle 100 travels on the generated route, and control the actuator group 120 by using the generated traveling control signal.

(F3) In the above-described forms (F1) and (F2), an internal sensor may be mounted in the vehicle 100, and a detection result output from the internal sensor may be used for at least one of the generation of the route and the generation of the traveling control signal. The internal sensor may include, for example, a camera, a LiDAR, a millimeter wave radar, an ultrasound sensor, a Global Positioning System (GPS) sensor, an acceleration sensor, and a gyro sensor. For example, in the above-described form (F1), the server 200 may acquire the detection result of the internal sensor and reflect the detection result of the internal sensor in the route when generating the route. In the above-described form (F 1), the vehicle 100 may acquire the detection result of the internal sensor and reflect the detection result of the internal sensor to the traveling control signal when the traveling control signal is generated. In the above-described form (F2), the vehicle 100 may acquire the detection result of the internal sensor and reflect the detection result of the internal sensor to the route when the route is generated. In the above-described form (F2), the vehicle 100 may acquire the detection result of the internal sensor and reflect the detection result of the internal sensor to the traveling control signal when the traveling control signal is generated.

(F4) In each of the fourth and fifth embodiments, an internal sensor may be mounted in the vehicle 100, and a detection result output from the internal sensor may be used for at least one of the generation of the route and the generation of the traveling control signal. For example, the vehicle 100 may acquire the detection result of the internal sensor and reflect the detection result of the internal sensor to the route when the route is generated. The vehicle 100 may acquire the detection result of the internal sensor and reflect the detection result of the internal sensor to the traveling control signal when the traveling control signal is generated.

(F5) In the fourth and fifth embodiments, the vehicle 100 acquires the vehicle position information by using the detection result of the external position information sensor 300. Meanwhile, the internal sensor may be mounted in the vehicle 100, and the vehicle 100 may acquire the position information by using the detection result of the internal sensor, decide the target position to which the vehicle 100 should head next, generate the route from the current position of the vehicle 100 represented by the acquired position information to the target position, generate the traveling control signal for causing the vehicle 100 to travel on the generated route, and control the actuator group 120 by using the generated traveling control signal. In this case, the vehicle 100 can travel without using the detection result of the external position information sensor 300 at all. In addition, the vehicle 100 may acquire a target arrival time or traffic jam information from the outside of the vehicle 100 and reflect the target arrival time or the traffic jam information to at least one of the route and the traveling control signal. Further, the entire functional configuration of the vehicle control system 10 may be provided in the vehicle 100. That is, the processing implemented by the vehicle control system 10, such as the destination change or the derailment detection illustrated in the present disclosure, may be implemented solely by the vehicle 100.

(F6) In the first to third embodiments, the server 200 automatically generates the traveling control signal to be transmitted to the vehicle 100. In contrast, the server 200 may generate the traveling control signal to be transmitted to the vehicle 100 in response to an operation of an operator who is located outside the vehicle 100. For example, the operator may operate an operation device, and the server 200 may generate the traveling control signal in accordance with the operation applied to the operation device. The operation device includes a display that displays the image output from the external position information sensor 300, a steering wheel, an accelerator pedal, and a brake pedal for remotely controlling the vehicle 100, and the communication device that communicates with the server 200 using wired communication or wireless communication.

(F7) The transport of the vehicle 100 using the traveling of the vehicle 100 via the unmanned driving is also referred to as "autonomous transport". A configuration for implementing the autonomous transport is also referred to as "vehicle remote control autonomous transport system". A production method of producing the vehicle 100 by using the autonomous transport is also referred to as "autonomous production". In the autonomous production, for example, at the factory that manufactures the vehicle 100, at least a part of the transport of the vehicle 100 is implemented by the autonomous transport.

(F8) In each of the above-described embodiments, a part or all of the functions and the pieces of processing implemented by the software may be implemented by the hardware. In addition, a part or all of the functions and the pieces of processing implemented by the hardware may be implemented by the software. As the hardware for implementing various functions in each of the above-described embodiments, various circuits, such as an integrated circuit or a discrete circuit, may be used.

The present disclosure is not limited to the above-described embodiments, and can be implemented with various configurations without departing from the spirit of the present disclosure. For example, the technical features in the embodiments corresponding to the technical features in each form described in the section of SUMMARY OF THE INVENTION can be replaced or combined as appropriate to solve some or all of the above objects, or to achieve some of or all the above effects. In a case where the technical features are not described as necessary features in the present specification, the features can be deleted as appropriate.

**Claims**

1. A control device (110; 200) for a vehicle, the control device comprising:

   an external force information acquisition unit (163; 213) configured to acquire external force information on external force acting on a vehicle that is an autonomous vehicle;
   an external force determination unit (164; 214) configured to determine a kind of the external force by using the external force information; and
   a traveling control signal generation unit (165; 215) configured to generate a traveling control signal for the vehicle in accordance with the kind of the external force.

2. The control device (110; 200) according to claim 1, wherein the kind of the external force includes a first kind of external force that needs a stop or a retreat of the vehicle and a second kind of external force that needs neither the stop nor the retreat of the vehicle.

3. The control device (110; 200) according to claim 1, wherein the external force information acquisition unit (163; 213) is configured to acquire information indicating reaction force of a drive motor or a steering motor of the vehicle as the external force information.

4. The control device (110; 200) according to claim 1, wherein the kind of the external force includes a first kind of external force generated when the vehicle rides on an external object and a second kind of external force generated by work with respect to the vehicle.

5. The control device (110; 200) according to claim 1, further comprising a traveling control signal transmission unit (216) configured to transmit the traveling control signal to the vehicle.

6. The control device (110; 200) according to any one of claims 1 to 5, wherein the external force information includes at least one of a generation position of the external force acting on the vehicle, a direction of the external force, a magnitude of the external force, and a time-series change in the external force.

7. The control device (110; 200) according to claim 6, wherein the traveling control signal generation unit (165; 215) is configured to generate the traveling control signal such that the vehicle is caused to stop or retreat under a condition that the kind of the external force is vertically upward external force acting on wheels of the vehicle.

8. The control device (110; 200) according to claim 6, wherein the external force determination unit (164; 214) is configured to perform the determination by distinguishing between a first kind of external force generated when the vehicle rides on an external object and a second kind of external force generated by work with respect to the vehicle, in accordance with the time-series change in the external force.

9. A control method for a vehicle, the control method comprising:

   acquiring external force information on external force acting on a vehicle that is an autonomous vehicle;
   determining a kind of the external force by using the external force information; and
   generating a traveling control signal for the vehicle in accordance with the kind of the external force.

10. The control method according to claim 9, wherein the kind of the external force includes a first kind of external force that needs a stop or a retreat of the vehicle and a second kind of external force that needs neither the stop nor the retreat of the vehicle.

11. The control method according to claim 9, wherein acquiring the external force information includes acquiring information indicating reaction force of a drive motor or a steering motor of the vehicle as the external force information.

12. The control method according to claim 9, wherein the kind of the external force includes a first kind of external force generated when the vehicle rides on an external object and a second kind of external force generated by work with respect to the vehicle.

13. The control method according to any one of claims 9 to 12, wherein the external force information includes at least one of a generation position of the external force acting on the vehicle, a direction of the external force, a magnitude of the external force, and a time-series change in the external force.

14. The control method according to claim 13, wherein generating the traveling control signal includes generating the traveling control signal such that the vehicle is caused to stop or retreat under a condition that the kind of the external force is vertically upward external force acting on wheels of the vehicle.

15. The control method according to claim 13, wherein determining the kind of the external force includes performing the determination by distinguishing between a first kind of external force generated when the vehicle rides on an external object and a second kind of external force generated by work with respect to the vehicle, in accordance with the time-series change in the external force.

# FIG. 1

## FIG. 2

# FIG. 3

# FIG. 4

# FIG. 5

EXTERNAL FORCE
DETECTION VALUE

F141,F143

TIME

FIG. 6

**SERVER**                                    R30

```
┌─────────────┐
│    START    │
└─────────────┘
       │                                     S31
┌──────────────────────────────────┐
│ ACQUIRE VEHICLE POSITION INFORMATION │
└──────────────────────────────────┘
       │                                     S32
┌──────────────────────────────────┐
│    DECIDE NEXT TARGET POSITION    │
└──────────────────────────────────┘
       │                                     S33
┌──────────────────────────────────────────┐
│ GENERATE TRAVELING CONTROL SIGNAL AND TRANSMIT │
│ GENERATED TRAVELING CONTROL SIGNAL TO VEHICLE │
└──────────────────────────────────────────┘
       │
┌─────────────┐
│   RETURN    │
└─────────────┘
```

                                             R40

```
┌─────────────┐
│    START    │
└─────────────┘
       │                                     S41
┌──────────────────────────────────┐
│  ACQUIRE EXTERNAL FORCE INFORMATION  │
└──────────────────────────────────┘
       │                                     S42
┌──────────────────────────────────┐
│   DETERMINE KIND OF EXTERNAL FORCE   │
└──────────────────────────────────┘
       │                                     S43
┌──────────────────────────────────────────┐
│ GENERATE TRAVELING CONTROL SIGNAL AND TRANSMIT │
│ GENERATED TRAVELING CONTROL SIGNAL TO VEHICLE │
└──────────────────────────────────────────┘
       │
┌─────────────┐
│   RETURN    │
└─────────────┘
```

**VEHICLE**                                   R10

```
┌─────────────┐
│    START    │
└─────────────┘
       │                                     S11
       ◄─────────────────────────────┐
  < IS EXTERNAL FORCE INFORMATION ACQUIRED? >──No
       │ Yes                              S12
┌──────────────────────────────────┐
│     TRANSMIT EXTERNAL FORCE       │
│      INFORMATION TO SERVER        │
└──────────────────────────────────┘
       │
┌─────────────┐
│   RETURN    │
└─────────────┘
```

                                             R20

```
┌─────────────┐
│    START    │
└─────────────┘
       │                                     S21
       ◄─────────────────────────────┐
  < IS TRAVELING CONTROL SIGNAL RECEIVED? >──No
       │ Yes                              S22
┌──────────────────────────────────┐
│  CONTROL ACTUATOR GROUP IN RESPONSE  │
│     TO TRAVELING CONTROL SIGNAL      │
└──────────────────────────────────┘
       │
┌─────────────┐
│   RETURN    │
└─────────────┘
```

EP 4 524 676 A1

# FIG. 7

SERVER

START

ACQUIRE VEHICLE POSITION INFORMATION — S51

DECIDE NEXT TARGET POSITION — S52

ACQUIRE EXTERNAL FORCE INFORMATION — S53

DETERMINE KIND OF EXTERNAL FORCE — S54

GENERATE TRAVELING CONTROL SIGNAL AND TRANSMIT GENERATED TRAVELING CONTROL SIGNAL TO VEHICLE — S55

RETURN

R50

VEHICLE

START

IS EXTERNAL FORCE INFORMATION ACQUIRED? — S11 — No

Yes

TRANSMIT EXTERNAL FORCE INFORMATION TO SERVER — S12

RETURN

R10

START

IS TRAVELING CONTROL SIGNAL RECEIVED? — S21 — No

Yes

CONTROL ACTUATOR GROUP IN RESPONSE TO TRAVELING CONTROL SIGNAL — S22

RETURN

R20

EP 4 524 676 A1

## FIG. 8

## FIG. 9

**PROCESSOR**

151 — VEHICLE CONTROLLER

161 — VEHICLE POSITION INFORMATION ACQUISITION UNIT

162 — TARGET POSITION DECISION UNIT

163 — EXTERNAL FORCE INFORMATION ACQUISITION UNIT

164 — EXTERNAL FORCE DETERMINATION UNIT

165 — TRAVELING CONTROL SIGNAL GENERATION UNIT

**MEMORY**

PROGRAM — PG1

IDEAL ROUTE — IR

111    113 — INPUT/OUTPUT INTERFACE    114    112

120 ACTUATOR GROUP

130 COMMUNICATION DEVICE

140 EXTERNAL FORCE INFORMATION SENSOR

300    205 COMMUNICATION DEVICE    400 PROCESS MANAGEMENT DEVICE

200

203 — INPUT/OUTPUT INTERFACE    204

201 PROCESSOR

202 MEMORY

PROGRAM — PG2

IDEAL ROUTE — IR

## FIG. 10

Europäisches
Patentamt

European
Patent Office

Office européen
des brevets

# EUROPEAN SEARCH REPORT

**Application Number**

EP 24 18 6032

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/024250 A1 (OAKI JUNJI [JP] ET AL) 22 January 2009 (2009-01-22) * paragraphs [0020] - [0022], [0031] - [0032] * | 1-15 | INV. G05D1/225 G05D1/241 G05D1/249 G05D1/622 |
| X | US 2016/031086 A1 (TANABE YOSHIKIYO [JP] ET AL) 4 February 2016 (2016-02-04) <br><br> * paragraphs [0023] - [0036] * | 1,2, 4-10, 12-15 | G05B19/418 G07C5/00 <br><br> ADD. |
| X | US 2021/072761 A1 (LEE HUN [KR] ET AL) 11 March 2021 (2021-03-11) * paragraphs [0032], [0049], [0050], [0098] * | 1,9 | G05D107/70 G05D109/10 G05D111/10 |
| X | EP 3 282 912 B1 (ELECTROLUX AB [SE]) 10 June 2020 (2020-06-10) * paragraphs [0009] - [0014], [0025] * | 1,4,9,12 | |
| X | EP 3 492 378 B1 (SONY INTERACTIVE ENTERTAINMENT INC [JP]) 19 January 2022 (2022-01-19) * paragraphs [0049], [0050] * | 1,4,5, 7-9,12, 14,15 | **TECHNICAL FIELDS SEARCHED (IPC)** <br><br> G05D <br> B25J |

The present search report has been drawn up for all claims

| Place of search | Date of completion of the search | Examiner |
|---|---|---|
| Munich | 13 November 2024 | Etienne, Yves |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 6032

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2024

| Patent document cited in search report | | | Publication date | Patent family member(s) | | | Publication date |
|---|---|---|---|---|---|---|---|
| US 2009024250 | A1 | | 22-01-2009 | JP | 4490997 | B2 | 30-06-2010 |
| | | | | JP | 2009025989 | A | 05-02-2009 |
| | | | | KR | 20090009144 | A | 22-01-2009 |
| | | | | US | 2009024250 | A1 | 22-01-2009 |
| US 2016031086 | A1 | | 04-02-2016 | CN | 105313142 | A | 10-02-2016 |
| | | | | DE | 102015009654 | A1 | 04-02-2016 |
| | | | | JP | 6140114 | B2 | 31-05-2017 |
| | | | | JP | 2016032858 | A | 10-03-2016 |
| | | | | US | 2016031086 | A1 | 04-02-2016 |
| US 2021072761 | A1 | | 11-03-2021 | EP | 3919335 | A1 | 08-12-2021 |
| | | | | US | 2021072761 | A1 | 11-03-2021 |
| | | | | WO | 2020159238 | A1 | 06-08-2020 |
| EP 3282912 | B1 | | 10-06-2020 | CN | 107405034 | A | 28-11-2017 |
| | | | | EP | 3282912 | A1 | 21-02-2018 |
| | | | | JP | 6743828 | B2 | 19-08-2020 |
| | | | | JP | 2018511364 | A | 26-04-2018 |
| | | | | KR | 20170137778 | A | 13-12-2017 |
| | | | | US | 2018120833 | A1 | 03-05-2018 |
| | | | | WO | 2016165772 | A1 | 20-10-2016 |
| EP 3492378 | B1 | | 19-01-2022 | CN | 109562830 | A | 02-04-2019 |
| | | | | EP | 3492378 | A1 | 05-06-2019 |
| | | | | JP | 6425822 | B2 | 21-11-2018 |
| | | | | JP | WO2018020671 | A1 | 26-07-2018 |
| | | | | US | 2019367166 | A1 | 05-12-2019 |
| | | | | WO | 2018020671 | A1 | 01-02-2018 |

EPO FORM P0459

For more details about this annex : see Official Journal of the European Patent Office, No. 12/82

**EP 4 524 676 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012218489 A